# EUROPÄISCHE PATENTANMELDUNG

(11) **EP 3 293 861 A1**
(43) Veröffentlichungstag der Anmeldung: **14.03.2018**
(21) Anmeldenummer: 16187803.8
(22) Anmeldetag: 08.09.2016
(51) Int. Cl.: H02K 3/51

(54) **ROTORENDKAPPE AUS VERBUNDWERKSTOFF**

(71) Anmelder: Siemens Aktiengesellschaft, 80333 München (DE)
(72) Erfinder: Belhareth, Kais, 45475 Mülheim an der Ruhr (DE); Haag, Dominique, 45897 Gelsenkirchen (DE); Heidelberg, Henrik, 40476 Düsseldorf (DE); Hortig, Christian, 44149 Dortmund (DE); Höfel, Mark, 41469 Neuss (DE); Höhner, Rene, 45881 Gelsenkirchen (DE); Kowalski, Carina, 45478 Mülheim an der Ruhr (DE); Rosendahl, Jens, 59071 Hamm (DE)

(57) **Zusammenfassung**

Die Erfindung betrifft eine Läuferkappe (7) aus Verbundwerkstoff für einen Rotor (1) einer elektrodynamischen Maschine, insbesondere eines elektrischen Generators, der aus einem Blechpaket (2) und einer Drehstromwicklung (4) besteht. Dabei ist die Läuferkappe (7) mittels Bolzen (13) am Rotorblechpaket (2) befestigt und vorzugsweise mit dem Rotorblechpaket (2) verzahnt, wobei die Läuferkappenzähne in die Nuten (3) des Rotorblechpakets (2) eingreifen.

## Beschreibung

Die Erfindung betrifft einen Rotor für eine elektrodynamische Maschine, umfassend ein Blechpaket mit Nuten zum Aufnehmen einer Drehstromwicklung, mit einer Läuferkappe, die zumindest aus Faserverbundwerkstoff gebildet ist.

Läufer von elektrischen Maschinen sind häufig mit Wicklungen ausgestattet, die an der Stirnseite eines Blechpakets bzw. Ballens in einem Wickelkopf miteinander verschaltet sind. Je höher die Beanspruchung der elektrischen Maschine ist, desto mehr erwärmt sich der Wickelkopf.

Dies gilt insbesondere auch für elektrische Maschinen mit hoher Drehzahl. Bei hoher Drehzahl werden häufig Läuferwickelkopfkappen, insbesondere zur radialen Abstützung der fliehkraftbelasteten Wickelköpfe benötigt. Diese Wickelkopfkappen bestehen in der Regel aus hochfestem Stahl und sind als geschlossene Strukturen ausgeführt. Das bedeutet, dass die Wickelkopfkappe im Wesentlichen hohlzylinderförmig ausgebildet ist, wobei ihr Mantel geschlossen ist. An der einen axialen Seite ist die Wickelkopfkappe auf dem Ballen der Welle aufgeschrumpft. An der anderen Stirnseite der zylinderförmigen Wickelkopfkappe befindet sich ein einteilig angeformter Ring, der einen etwas kleineren Durchmesser als den Außendurchmesser des Wickelkopfs besitzt. So ein Innendurchmesser ist jedoch größer als der axial aus der Wickelkopfkappe ragende Wellenbereich. Außerdem ist der Innendurchmesser des Wickelkopfs größer als der Außendurchmesser des Wellenbereichs. Daher kann Kühlmedium zwischen dem Wellenbereich und der ringförmigen Öffnung der Wickelkopfkappe in den Raum zwischen dem Wellenbereich und dem Wickelkopf strömen.

Der Ballen besitzt, sofern die elektrische Maschine für höhere Leistung ausgelegt ist, häufig radial gerichtete Entlüftungsbohrungen. Die Wickelkopfkappe ist aus stabilitätsgründen geschlossen ausgebildet. Dies führt im Kappenbereich zu einer unzureichenden Abfuhr der dort entstehenden Verlustwärme. Es entstehen Zonen mit sehr hoher Wicklungstemperatur (sog. "Hot-Spots").

Eine hohe Wicklungstemperatur setzt aber die Lebensdauer der Wicklungsisolierung deutlich herab. Als Gegenmaßnahme wird daher meist die Leistung der Maschine begrenzt oder die Maschine wird thermisch überdimensioniert ausgelegt.

Es sind Läufer für eine elektrische Maschine mit einer Wickelkopfkappe bekannt, die einen zylinderförmigen Mantel aufweisen, wobei der Mantel zumindest teilweise aus einem Faserverbundwerkstoff oder aus einem Leichtmetall oder aus einer Leichtmetalllegierung gebildet ist und einen durch ihn hindurch verlaufenden Kanal aufweist.

Problematisch ist hierbei die Befestigung der Läuferkappe am Blechpaket.

Es ist daher Aufgabe der Erfindung, einen Rotor anzugeben, bei dem eine Läuferkappe, die zumindest aus Faserverbundwerkstoff gebildet ist, besser an das Blechpaket angeordnet werden kann.

Gelöst wird diese Aufgabe durch einen Rotor für eine elektrodynamische Maschine, umfassend ein Blechpaket mit Nuten zum Aufnehmen einer Drehstromwicklung, mit einer Läuferkappe, die zumindest aus Faserverbundwerkstoff gebildet ist, wobei die Läuferkappe mittels eines Bolzens am Blechpaket befestigt ist.

Vorteilhafte Weiterbildungen sind in den Unteransprüchen angegeben.

In einer ersten vorteilhaften Weiterbildung ist die Läuferkappe an ihrem äußeren Ende mit einem Bund ausgebildet, wobei ein Hohlanker zwischen dem Bund und dem Blechpaket angeordnet ist, wobei im Hohlanker der Bolzen angeordnet ist.

Die Drehstromwicklung kann als Ständerwicklung ausgebildet sein.

In einer weiteren vorteilhaften Weiterbildung ist der Bolzen mit dem Blechpaket verschraubt.

In einer weiteren vorteilhaften Weiterbildung ist das Läuferkappenende verzahnt ausgeführt.

In einer weiteren vorteilhaften Weiterbildung ist der Rotor mit Nut-Verschlusskeilen ausgebildet und in die Nuten der Nut-Verschlusskeile ragt das verzahnte Läuferkappenende.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Gleiche Bauteile oder Bauteile mit gleicher Funktion sind dabei mit gleichen Bezugszeichen gekennzeichnet.

Es zeigen:
- Figur 1: eine schematische Schnittansicht einer Läuferkappe,
- Figur 2: eine schematische Draufsicht auf eine verzahnte Läuferkappe.

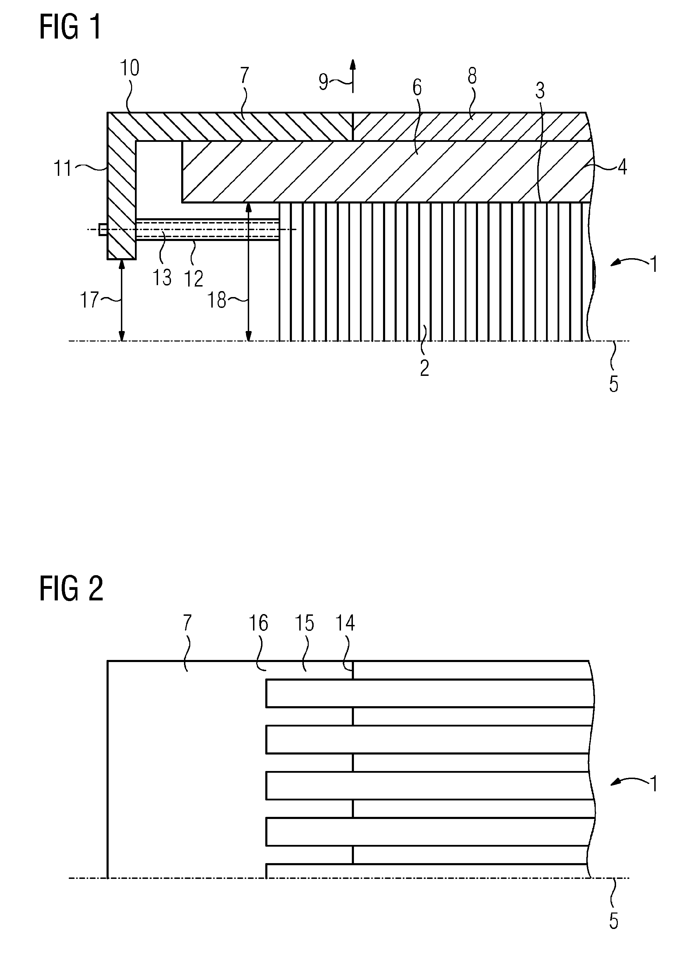

Die Figur 1 zeigt einen Ausschnitt eines Rotors 1 für eine elektrodynamische Maschine, wie z. B. einen elektrischen Generator. Der Rotor 1 umfasst ein Blechpaket 2 mit Nuten 3 zum Aufnehmen einer Drehstromwicklung 4. Der Rotor 1 ist um eine Rotationsachse 5 drehbar ausgebildet.

Die Figur 2 zeigt eine Draufsicht auf einen Teil des Rotors 1.

Die Drehstromwicklung 4 kann als Ständerwicklung ausgebildet sein.

Die Drehstromwicklung 4 ist durch Leitungsstäbe 6 gebildet, die in die Nuten 3 angeordnet werden. Um die Leitungsstäbe 6 ist eine Läuferkappe 7 angeordnet. Die Läuferkappe 7 ist aus einem nicht magnetisierbaren Verbundwerkstoff ausgebildet. Desweiteren werden die Leitungsstäbe 6 durch Nut-Verschlusskeile 8 derart am Rotor 1 befestigt, dass den während des Betriebs auftretenden radialen Kräften am Leitungsstab 6 entgegengewirkt wird.

Die Läuferkappe 7 weist hierbei an ihrem äußeren Ende 10 einen Bund 11 auf. Zwischen dem Bund 11 und dem Blechpaket 2 ist ein Hohlanker 12 angeordnet, wobei in dem Hohlanker 12 ein Bolzen 13 angeordnet ist, der mit dem Blechpaket 2 verschraubt ist.

Wie in Figur 2 dargestellt ist die Läuferkappe 7 an ihrem zweiten Ende 14 verzahnt ausgeführt. Das bedeutet am zweiten Ende 14 weist die Läuferkappe 7 zumindest einen Zahn 15 auf. Der Zahn 15 greift in eine vorhandene Teilnut 16 ein.

In der Figur 2 ist der Bolzen 13 und der Hohlanker 12 nicht näher dargestellt.

Der innere Durchmesser 17 des Bundes 11 liegt unter dem inneren Durchmesser 18 des Wickelkopfes. Die kraftschlüssige Verbindung zwischen der Läuferkappe 7 und dem integrierten Bund 11 mit dem Hohlanker 12 erfolgt dadurch, dass die zur Verspannung des Blechpakets 2 vorgesehenen Bolzen 13 durch den Hohlanker 12 geführt und verschraubt werden. In dieser Konfiguration wird die Fliehkraft durch die Läuferkappe 7 aufgenommen. Die kraftschlüssige Verbindung realisiert die Aufnahme möglicher dynamischer Störfallmomente, sowie die Form- und Lagetoleranz des Wickelkopfes. Die kraftschlüssige Verbindung kann durch eine formschlüssige Verbindung am Übergang Kappe 7 und Blechpaket 2 realisiert werden. Dazu wird das entsprechende zweite Ende 14 der Kappe verzahnt ausgeführt.

Der Hohlanker 12 wird so dimensioniert, dass einerseits ausreichende Steifigkeit und Festigkeit, andererseits ausreichend Durchtrittsfläche für das Kühlmedium vorhanden ist.

Durch die erfindungsgemäße Anordnung ist es möglich, eine sichere Fixierung und Abstützung des Wickelkopfes bei minimaler radialer Ausdehnung zu realisieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (1) für eine elektrodynamische Maschine, umfassend ein Blechpaket (2) mit Nuten (3) zum Aufnehmen einer Drehstromwicklung (4),
mit einer Läuferkappe (7), die zumindest aus Faserverbundwerkstoff gebildet ist,
**dadurch gekennzeichnet, dass**
die Läuferkappe (7) mittels eines Bolzens (13) am Blechpaket (2) befestigt ist.

2. Rotor (1) nach Anspruch 1,
wobei die Läuferkappe (7) an ihrem äußeren Ende (10) mit einem Bund (11) ausgebildet ist,
wobei ein Hohlanker (12) zwischen dem Bund (11) und dem Blechpaket (2) angeordnet ist,
wobei im Hohlanker (12) der Bolzen (13) angeordnet ist.

3. Rotor (1) nach Anspruch 1 oder 2,
wobei der Bolzen (13) mit dem Blechpaket (2) verschraubt ist.

4. Rotor (1) nach einem der vorhergehenden Ansprüche, wobei das Läuferkappenende verzahnt ausgeführt ist.

5. Rotor (1) nach Anspruch 4,
wobei der Rotor (1) mit Nut-Verschlusskeilen (8) ausgebildet ist und in die Nuten der Nut-Verschlusskeile (8) das verzahnte Läuferkappenende ragt.
